# EUROPÄISCHE PATENTSCHRIFT

(11) **EP 1 459 434 B1**
(45) Veröffentlichungstag und Bekanntmachung des Hinweises auf die Patenterteilung: **26.08.2009**
(21) Anmeldenummer: 02754279.4
(22) Anmeldetag: 28.06.2002
(51) Int. Cl.: H02M 7/5387, H02P 7/29, H02M 3/158

(54) **SCHALTUNGSANORDNUNG ZUM BETREIBEN EINER ELEKTRISCHEN MASCHINE**
CIRCUIT ARRANGEMENT FOR OPERATING AN ELECTRICAL MACHINE
CIRCUIT POUR FAIRE FONCTIONNER UNE MACHINE ELECTRIQUE

(30) Priorität: 20.11.2001 DE 10156939
(43) Veröffentlichungstag der Anmeldung: 22.09.2004
(73) Patentinhaber: ROBERT BOSCH GMBH, 70442 Stuttgart (DE)
(72) Erfinder: HALFMANN, Juergen, 77815 Buehl (DE); IMMENDOERFER, Ingo, 77815 Buehl (DE)
(86) Internationale Anmeldenummer: PCT/DE2002/002358
(87) Internationale Veröffentlichungsnummer: WO 2003/047082

(56) Entgegenhaltungen:
- EP-A- 0 444 404
- US-A- 5 428 522
- US-B1- 6 310 469

## Beschreibung

### Stand der Technik

Die Erfindung betrifft eine Schaltungsanordnung zum Betreiben einer elektrischen Maschine.
Aus der DE-A 42 29 440 ist eine Schaltungsanordnung zum Ein-und Ausschalten einer elektrischen Maschine mit einer induktiven Komponente bekannt geworden, bei der ein zur elektrischen Maschine parallel geschalteter Freilaufkreis für den Abbau der in der induktiven Komponente gespeicherten magnetischen Energie nach dem Abschalten sorgt. Der Freilaufkreis enthält einen Schalter, beispielsweise einen MOSFET, der unmittelbar nach dem Abschalten der Endstufe eingeschaltet wird. Der Vorteil des Einsatzes eines Schalters im Freilauf anstatt einer Diode liegt in der geringeren Verlustleistung, die während des Stromflusses im Freilaufkreis auftritt. Der Einschaltzustand des im Freilaufkreis angeordneten Schalters wird beendet mit dem Auftreten eines Einschaltsignals für die elektrische Maschine.

Aus der DE-A 198 41 341 ist ein Abwärts-Drosselwandler bekannt geworden, der zur Reduzierung der Verlustleistung mit Schaltern bestückt ist, die als Synchrongleichrichter betrieben werden. Im sogenannten lückenden Betrieb kann zeitweilig ein Rückwärtsstrom auftreten, der vom Ausgang in

Richtung Eingang durch die Drossel fließt. Zur Vermeidung des Rückwärtsstromes durch den Synchrongleichrichter ist eine Vorrichtung zum Erfassen der Stromrichtung vorgesehen, die den Spannungsabfall am Synchrongleichrichter auswertet.

Das Dokument US 5428522 schlägt zur Reduzierung der Verluste und zur Bestimmung und Festlegung der Stromrichtung eine Zweipunktregelung vor.

Der Erfindung liegt die Aufgabe zugrunde, eine Schaltungsanordnung zum Betreiben elektrischer Maschinen mit einer induktiven Komponente anzugeben, die eine Wirkungsgradoptimierung ermöglicht.

Die Aufgabe wird durch die im unabhängigen Anspruch angegebenen Merkmale gelöst.

### Vorteile der Erfindung

Gemäß der erfindungsgemäßen Schaltungsanordnung zum Betreiben einer elektrischen Maschine mit einer induktiven Komponente ist zunächst ein Schalter vorgesehen, der die elektrische Maschine mit einem impulsförmigen Steuersignal beaufschlagt. Vorhanden ist ein Freilaufkreis, der ebenfalls einen Schalter enthält. Ein Komparator vergleicht den im Freilaufkreis fließenden Strom mit einem vorgegebenen Schwellenwert und stellt beim Unterschreiten des Schwellenwertes ein Schaltsignal bereit, das zum Abschalten des Schalters im Freilaufkreis herangezogen wird.

Die erfindungsgemäße Schaltungsanordnung ermöglicht einen aktiv geschalteten Freilaufbetrieb.

Ein wesentlicher Vorteil der erfindungsgemäßen Schaltungsanordnung ist die Reduzierung der Verlustleistung. Die Verlustleistungsreduzierung betrifft einerseits die elektrischen Verluste im Freilaufkreis, die zu einer Erwärmung führen und andererseits die mechanischen Verluste in der elektrischen Maschine.

Die Reduzierung der elektrischen Verluste im Freilaufkreis wird durch den bereits im Stand der Technik gemäß DE-A 42 29 440 eingesetzten Schalter anstelle einer Diode erreicht. Die Reduzierung der mechanischen Verluste in der elektrischen Maschine wird durch eine Erfassung des im Freilaufkreises fließenden Freilaufstromes erreicht, der vom Komparator mit einem vorgegebenen Schwellenwert verglichen wird. Das am Komparator auftretende Schaltsignal beim Unterschreiten des Schwellenwertes schaltet den Schalter im Freilaufkreis ab. Die in der elektrischen Maschine gespeicherte mechanische Energie bewirkt ein Weiterdrehen der elektrischen Maschine während der Impulspausen des impulsförmigen Steuersignals. Ohne ein Abschalten des Schalters im Freilaufkreis würde die an der induktiven Komponente der elektrischen Maschine auftretende induzierte Spannung nach dem Abklingen des zunächst in positiver Richtung fließenden Freilaufstroms für ein rasches Ansteigen des Freilaufstroms in negativer Richtung sorgen, verbunden mit einem unerwünschten Bremsvorgang der elektrischen Maschine. Die erfindungsgemäß vorgesehenen Merkmale verhindern das Auftreten des Bremsvorgangs durch Abschalten des elektronischen Schalters im Freilaufkreis wirkungsvoll.

Die erfindungsgemäße Schaltungsanordnung eignet sich insbesondere zum Betreiben der elektrischen Maschine mit einem pulsbreitenmodulierten Signal, mit dem die mittlere Betriebsspannung der elektrischen Maschine vorgegeben wird.

Vorteilhafte Weiterbildungen und Ausgestaltungen der erfindungsmeäßen Schaltungsanordnung ergeben sich aus abhängigen Ansprüchen.

Eine vorteilhafte Ausgestaltung sieht vor, dass der Schwellenwert des Komparators auf den Betrag von wenigstens näherungsweise Null festgelegt ist. Mit dieser Maßnahme wird ein Stromnulldurchgang detektiert, der zu einem Bereitstellen des Schaltsignales am Komparator führt, das den Schalter im Freilaufkreis zum optimalen Zeitpunkt abschaltet.

Eine vorteilhafte Ausgestaltung sieht vor, dass der im Freilaufkreis fließende Strom anhand des Spannungsabfalles am Schalter im Freilaufkreis erfasst wird. Ein separater Stromsensor kann entfallen.

Eine vorteilhafte Ausgestaltung der erfindungsgemäßen Schaltungsanordnung sieht vor, dass die Wicklung(en) der elektrischen Maschine in einer H-Brückenschaltung angeordnet ist, die zwei Highside- und zwei Lowside-Schalter enthält. Die Brückenschaltung ermöglicht eine Drehrichtungsumkehr der elektrischen Maschine.

Eine vorteilhafte Ausgestaltung der H-Brücke sieht vor, dass ein Highside-Schalter ständig eingeschaltet ist, ein Lowside-Schalter ein pulsbreitemoduliertes Steuersignal zugeführt erhält und dass dem anderem Highside-Schalter die Freilauffunktion zugewiesen ist.

Eine vorteilhafte alternative Ausgestaltung der H-Brückenschaltung sieht vor, dass ein Lowside-Schalter ständig eingeschaltet ist, ein Highside-Schalter das pulsbreitenmodulierte Signal zugeführt erhält und dass der andere Lowside-Schalter die Freilauffunktion übernimmt.

Eine vorteilhafte Ausgestaltung sieht vor, dass als Schalter MOSFET-Transistoren eingesetzt werden. Derartige Transistoren eignen sich aufgrund der niedrigen Durchlasswiderstände im eingeschalteten Zustand insbesondere für Applikationen mit niedrigen Betriebsspannungen und hohen Betriebsströmen.

Eine bevorzugte Verwendung findet die erfindungsgemäße Schaltungsanordnung bei Drehfeldmaschinen wie z.B. BLDC(Brushless-DC)-Motoren und Asynchronmotoren mit mehreren Strängen.

Weitere vorteilhafte Ausgestaltungen und Weiterbildungen der erfindungsgemäßen Schaltungsanordnung ergeben sich aus weiteren abhängigen Ansprüchen und aus der folgenden Beschreibung.

### Zeichnung

Figur 1 zeigt ein Blockschaltbild einer Brückenwechselrichter-Schaltung mit einem dreisträngigen BLDC-Motor,
Figur 2 zeigt eine H-Brücke als Detail des in Figur 1 gezeigten Brückenwechselrichters und
Figuren 3A-3E zeigen Signalverläufe in Abhängigkeit von der Zeit, die im Brückenwechselrichter gemäß Figur 1 und in der H-Brücke gemäß Figur 2 auftreten.

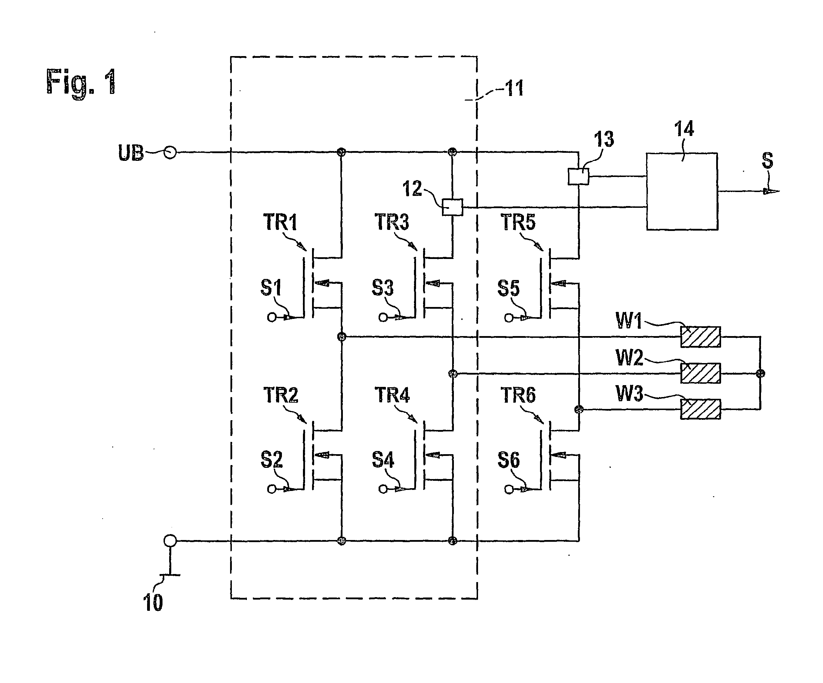

Der in Figur 1 gezeigte Brückenwechselrichter enthält drei zwischen einer Versorgungsspannung UB und Masse 10 liegende Serienschaltungen, die jeweils zwei Schalter TR1, TR2; TR3, TR4; TR5, TR6 enthalten. Die an die Versorgungsspannung UB angeschlossenen Schalter TR1, TR3, TR5 werden als Highside-Schalter und die an die Masse 10 angeschlossenen Schalter TR2, TR4, TR6 als Lowside-Schalter bezeichnet. Die Schalter TR1, TR2; TR3, TR4; TR5, TR6 werden mit einem ersten, zweiten, dritten, vierten, fünften und sechsten Steuersignal S1, S2, S3, S4, S5, S6 angesteuert.

Eine nicht näher gezeigte elektrische Maschine enthält einen ersten, zweiten und dritten Strang W1, W2, W3. Die Stränge W1, W2, W3 sind sternförmig verschaltet. Die Serienschaltung aus dem ersten und zweiten Strang W1, W2 liegt in der Diagonale einer H-Brücke 11, die die Schalter TR1 und TR3 als Highside-Schalter und die Schalter TR2 und TR4 als Lowside-Schalter enthält. Die Serienschaltung aus dem zweiten und dritten Strang W1, W3 liegt in der Diagonale einer H-Brücke, die die Schalter TR3 und TR5 als Highside-Schalter und die Schalter TR4 und TR6 als Lowside-Schalter enthält. Die Serienschaltung aus dem ersten und dritten Strang W1, W3 liegt in der Diagonale einer H-Brücke, die die Schalter TR1 und TR5 als Highside-Schalter und die Schalter TR2 und TR6 als Lowside-Schalter enthält.

Der im Schalter TR3 fließende Strom wird von einer ersten Stromerfassung 12 und der im Schalter TR5 fließende Strom von einer zweiten Stromerfasssung 13 erfasst. Die Stromerfassungen 12, 13 sind mit einer Stromauswerteanordnung verbunden, die ein Schaltsignal S abgibt.

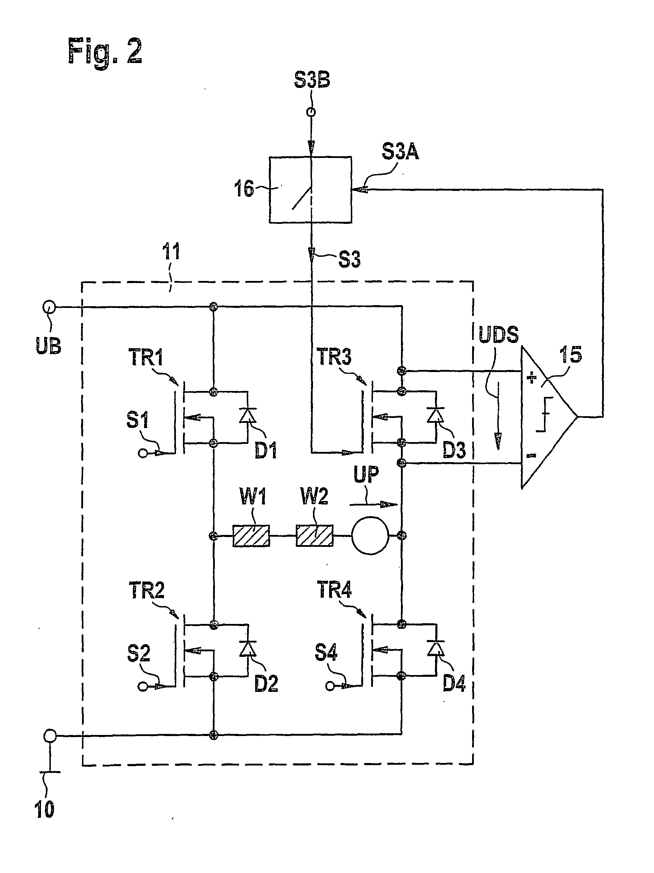

Figur 2 zeigt die in Figur 1 strichliniert hervorgehobene H-Brücke 11 detailliert. Bei den Schaltern TR1-TR4 sind jeweils strukturbedingte Dioden D1-D4 eingetragen, deren kathodenseitiges Ende jeweils in Richtung Versorgungsspannung UB zeigt. Die Serienschaltung des ersten und zweiten Stranges W1, W2 der nicht näher gezeigten elektrischen Maschine ist ergänzt mit einer induzierten Spannung UP, die bei Synchronmaschinen als Polradspannung bezeichnet wird.

Der Spannungsabfall UDS am Schalter TR3 wird einem Komparator 14 zugeführt, der ein Schaltsignal S3A an eine Schaltlogik 15 abgibt. Die Schaltlogik 15 gibt in Abhängigkeit vom Schaltsignal S3A und in Abhängigkeit von einem weiteren Schaltsignal S3B das dritte Steuersignal S3 an den dritten Schalter TR3 ab.

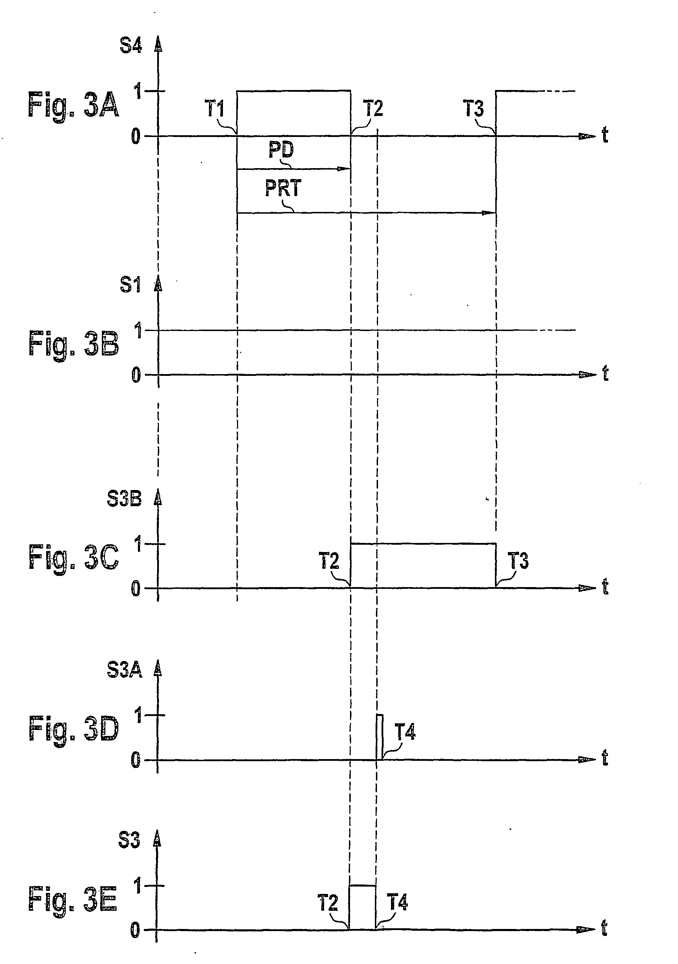

Die Figuren 3A-3E zeigen das erste, dritte und vierte Steuersignal S1, S3, S4, sowie die Schaltsignale S3A und S3B jeweils in Abhängigkeit von der Zeit t.

Zu einem ersten Zeitpunkt T1 wechselt das vierte Steuersignal S4 von einem Ausschaltpegel Null auf einen Einschaltpegel Eins und wechselt zu einem zweiten Zeitpunkt T2 vom Einschaltpegel Eins auf den Ausschaltpegel Null. Die Differenz zwischen dem zweiten und ersten Zeitpunkt T1, T2 entspricht einer Einschaltdauer PD. Zu einem dritten Zeitpunkt T3 wechselt das vierte Steuersignal S4 wieder vom Ausschaltpegel Null auf den Einschaltpegel Eins. Die Differenz zwischen dem dritten Zeitpunkt und dem ersten Zeitpunkt T3, T1 entspricht einer Periodendauer PRT.

Das erste Steuersignal S1 weist gemäß Figur 3B während des gezeigten Zeitabschnitts ständig den Einschaltpegel Eins auf.

Das Schaltsignal S3B wechselt gemäß Figur 3C zum zweiten Zeitpunkt T2 vom Ausschaltpegel Null auf den Einschaltpegel Eins und wechselt zum dritten Zeitpunkt T3 vom Einschaltpegel Eins auf den Ausschaltpegel Null.

Das Schaltsignal S3A tritt zu einem vierten Zeitpunkt T4 auf, der zwischen dem zweiten und dritten Zeitpunkt T2, T3 liegt. Das Schaltsignal S3A wechselt impulsförmig vom Ausschaltpegel Null auf den Einschaltpegel Eins und kehrt auf den Ausschaltpegel Null zurück.

Das in Figur 3E gezeigte dritte Steuersignal S3 wechselt zum zweiten Zeitpunkt T2 vom Ausschaltpegel Null auf den Einschaltpegel Eins und geht zum vierten Zeitpunkt T4 wieder zurück auf den Ausschaltpegel Null.

Um Brückenkurzschlüsse zu vermeiden, werden in der Praxis hier nicht näher betrachtete Differenzzeiten eingefügt.

Die erfindungsgemäße Schaltungsanordnung wird anhand von Figur 2 näher erläutert:

Von dem in Figur 1 gezeigten Brückenwechselrichter ist in Figur 2 die in Figur 1 hervorgehobene H-Brücke 11 detailliert gezeigt. In Abhängigkeit vom vorgegebenen Bestromungsschema der Stränge W1, W2, W3 der nicht näher gezeigten elektrischen Maschine treten entsprechende Schaltfunktionen in den nicht näher betrachteten weiteren H-Brücken auf. Die in Figur 1 eingetragenen Stromerfassungen 12, 13, die Stromauswerteanordnung 14 und das Schaltsignal S entsprechen in Figur 2 dem Spannungsabfall UDS, dem Komparator 15 und dem Schaltsignal S3A. Die Stromerfassung erfolgt demnach ohne einen zusätzlichen Sensor nur durch eine Auswertung des Spannungsabfalles UDS am dritten Schalter TR3, der dem Komparator 15 zugeführt ist. Der für den Komparator 15 benötigte Schwellenwert ist im gezeigten Ausführungsbeispiel identisch mit einem Bezugswert des Spannungsabfalles UDS, der gleich dem Potenzial sein soll, das an der Verbindung des dritten mit dem vierten Schalter TR3, TR4 auftritt. Übersteigt der Spannungsabfall UDS den Schwellenwert, so weist das Schaltsignal S3A den Nullpegel auf und unterschreitet der Spannungsabfall UDS den Schwellenwert, so weist das Schaltsignal S3A den Einschaltpegel Eins auf.

Das Schaltsignal S3A wird der Schaltlogik 16 zugeführt, die das für den dritten Schalter TR3 vorgesehene dritte Steuersignal S3 bereitstellt, das aus dem Schaltsignal S3B gewonnen wird. Das Schaltsignal S3B sowie die weiteren Steuersignale S1, S2, S3 werden von einer nicht näher gezeigten Steuerschaltung bereitgestellt.

Die in Figur 2 gezeigte H-Brücke 11 entspricht beispielhaft einer Bestromung des ersten und zweiten Stranges W1, W2 der in Sternschaltung verschalteten Stränge W1, W2, W3. Die Einschaltdauer PD des vierten Schalters TR4 entspricht der Bestromungsphase und die Zeitdifferenz zwischen dem dritten und zweiten Zeitpunkt T3, T2 entspricht der Freilaufphase des ersten und zweiten Stranges W1, W2. Der Vorgang wiederholt sich periodisch mit der in Figur 3A eingetragenen Periodendauer PRT. Vorgesehen ist demnach ein impulsförmiger Betrieb. Vorzugsweise ist eine Pulsbreitenmodulation vorgesehen, wobei die Modulation insbesondere durch eine Variation der Einschaltdauer TD vorgenommen wird. Erforderlichenfalls kann auch die Periodendauer PRT entweder ausschließlich oder zusätzlich verändert werden. Die Periodendauer PRT kann beispielsweise im Mikrosekundenbereich liegen, entsprechend einer Taktfrequenz im Kilohertzbereich.

Das gemäß Figur 2 näher dargestellt Vorgehen gilt entsprechend für jede andere Strangkombination W1, W3; W2, W3. Die nachfolgenden Ausführungen gelten gleichermaßen für im Dreieck geschaltete Stränge W1, W2, W3. Anstelle jeweils zweier Stränge W1, W2; W1, W3; W2, W3 liegen bei dieser Ausgestaltung die Stränge W1, W2, W3 jeweils einzeln in der Diagonale der H-Brückenschaltungen.

Im gezeigten Ausführungsbeispiel gemäß Figur 2 ist lediglich am dritten Schalter TR3 eine Erfassung des Spannungsabfalles UDS eingetragen. Im Allgemeinen wird der Spannungsabfall UDS an sämtlichen Highside-Schaltern TR1, TR3, TR5 oder sogar an sämtlichen Schaltern TR1 - TR6 des Wechselrichters vorgesehen.

Bei der Bestromung der Stränge W1, W2 während der Einschaltdauer TD wird ein Strom aufgebaut, der durch den ersten Schalter TR1, durch die beiden Stränge W1, W2 und den vierten Schalter TR4 fließt. Der Stromfluss hat einen positiven Leistungsumsatz im ersten und zweiten Strang W1, W2 zur Folge, der durch das Produkt UP*I repräsentiert wird und die nicht näher gezeigte elektrische Maschine antreibt. Nach Ablauf der Einschaltdauer TD beginnt die zwischen dem zweiten und dritten Zeitpunkt T2, T3 liegende Freilaufphase des Stromes durch den ersten und zweiten Strang W1, W2. Die Freilaufphase beginnt mit dem Abschalten des vierten Schalters TR4 zum zweiten Zeitpunkt T2.

In einer nicht gezeigten alternativen Ausgestaltung kann auch der erste Schalter TR1 geschlossen werden. Wird gemäß dem gezeigten Ausführungsbeispiel zum zweiten Zeitpunkt T2 der vierte Schalter TR4 gesperrt, tritt ein Freilaufstrom auf, der durch den ersten Schalter TR1, den ersten und zweiten Strang W1, W2 und den dritten Schalter TR3 fließt.

Die den Freilaufstrom führenden Schalter TR1-TRH6 müssen zur Führung des Freilaufstromes geeignet ausgestaltet sein. Im gezeigten Ausführungsbeispiel werden vorzugsweise Feldeffekttransistoren, insbesonderes MOS-Feldeffekttransistoren eingesetzt, die strukturbedingte Dioden D1-D4 enthalten. Sofern im Schalter TR1-TR6 kein geeigneter Freilaufstrompfad vorbereitet ist, sind diskrete Bauelemente erforderlich, die den Freilaufstrom führen können. Der Freilaufstrom im dritten Schalter TR3 erzeugt an der dritten Diode D3 einen Spannungsabfall, der der Diodendurchlassspannung entspricht.

Eine erhebliche Reduzierung der Verlustleistung wird erfindungsgemäß erreicht, wenn die Schalter TR1-TR6, im Ausführungsbeispiel zunächst der dritte Schalter TR3, während des Freilaufes eingeschaltet werden. Im Freilaufbetrieb wird der dritte Schalter TR3 invers betrieben. Das von der nicht näher gezeigten Steuerschaltung bereitgestellte Schaltsignal S3B für den dritten Schalter TR3 wird gemäß Figur 3C während der Freilaufphase zwischen dem zweiten und dritten Zeitpunkt T2, T3 auf Einschaltpegel gehalten. Aufgrund des Wegfalls der Diodendurchlassspannung der dritten Diode D3 tritt nur der geringe Spannungsabfall UDS auf, der der Durchlassspannung des dritten Schalters TR3 im durchgeschalteten Zustand entspricht.

Der Freilaufstrom sorgt weiterhin für eine positive Leistung im ersten und zweiten Strang W1, W2, entsprechend dem positiven Produkt UP*I. Die in der induktiven Komponente der beiden Stränge W1, W2 gespeicherte induktive Energie wird aufgebraucht.

Aufgrund der sich weiterhin drehenden elektrischen Maschine fließt der Freilaufstrom nach dem Abbau der induktiv gespeicherten Energie weiter, da er von der induzierten Spannung UP der elektrischen Maschine aufrechterhalten wird. Der durch die induzierte Spannung UP jetzt weiterhin aufrechterhaltene Freilaufstrom weist allerdings nun ein entgegengesetztes Vorzeichen auf. In diesem Betriebszustand tritt eine unerwünschte negative Leistung am ersten und zweiten Strang W1, W2 auf, die einem Abbremsen der elektrischen Maschine entspricht.

Vorgesehen ist die Erfassung des Freilaufstroms, der im gezeigten Ausführungsbeispiel indirekt über den Spannungsabfall UDS ermittelt wird. Der Freilaufstrom wird mit einem vorgegebenen Schwellenwert des Komparators 15 verglichen. Im gezeigten Ausführungsbeispiel wird der Schwellenwert durch das Bezugspotenzial des Spannungsabfalles UDS gebildet. Der Komparator 15 gibt das Schaltsignal S3A zum vierten Zeitpunkt T4 ab, wenn der Spannungsabfall UDS wenigstens näherungsweise das Vorzeichen wechselt. Entsprechend dem Vorzeichenwechsel des Spannungsabfalles UDS tritt zu diesem Zeitpunkt ein Nulldurchgang des Freilaufstroms auf, der zum Zeitpunkt T4 von einem positiven auf einen negativen Wert wechselt.

Das vom Komparator 15 abgegebene Schaltsignal S3A wird der Schaltlogik 16 zugeleitet, die das Schaltsignal S3B ab dem vierten Zeitpunkt T4 unterdrückt. Dem dritten Schalter wird deshalb das dritte Steuersignal S3 nur während einer Zeitdauer zugeleitet, die der Differenz zwischen dem vierten und zweiten Zeitpunkt T4, T2 gemäß Figur 3E entspricht. Zum vierten Zeitpunkt T4 wird damit der dritte Schalter TR3 abgeschaltet. Die dritte Diode D3 sperrt nach einem Nulldurchgang des Freilaufstromes von sich aus. Ein Weiterfließen des Freilaufstroms durch den dritten Schalter TR3 ist deshalb ab dem vierten Zeitpunkt T4 nicht mehr möglich.

Anstelle des dritten Schalters TR3 kann zum Führen des Freilaufstromes gleichermaßen der zweite Schalter TR2 herangezogen werden. Bei dieser Ausgestaltung wird der erste Schalter TR1 mit einem Steuersignal S1 beaufschlagt, das dem in Figur 3A gezeigten vierten Steuersignall S4 entspricht und der vierte Schalter TR4 wird mit einem Steuersignal S4 beaufschlagt, das dem in Figur 3B gezeigten ersten Steuersignal S1 des ersten Schalters TR1 entspricht.

Bei dieser Ausgestaltung ist der Spannungsabfall UDS am zweiten Schalter TR2 auszuwerten.

Die erfindungsgemäße Schaltungsanordnung ermöglicht aufgrund des aktiv geschalteten Freilaufes einen verlustarmen Betrieb, der zu einem geringeren Kühlungsaufwand des Wechselrichters führt. Die erfindungsgemäße Schaltungsanordnung eignet sich daher insbesondere zum Betreiben von elektrischen Maschinen, die einen vergleichsweise hohen Strombedarf aufweisen. Als elektrische Maschinen werden vorzugsweise BLDC-Motoren oder Asynchronmotoren eingesetzt. Bei vergleichsweise niedrigen Betriebsspannungen in einem Bereich unterhalb von 100 Volt, wie sie beispielsweise in Kraftfahrzeugen zur Verfügung stehen, können die Schalter TR1-TR6 als Feldeffekttransistoren, insbesondere als MOS-Feldeffekttransistoren realisiert werden, die strukturbedingt die Dioden D1-D4 enthalten.

## Patentansprüche

1. Schaltungsanordnung zum Betreiben von elektrischen Maschinen, die eine induktive Komponente (W1, W2, W3) enthalten, mit einem Schalter (TR1 - TR6), der die elektrische Maschine mit einem impulsförmigen Signal (S1 - S4) schaltet, mit einem Freilaufkreis, der einen Schalter (TR1 - TR6) enthält, mit einem Komparator (15), der den während einer Freilaufphase im Freilaufkreis fließenden Freilaufstrom mit einem vorgegebenen Schwellenwert vergleicht, **dadurch gekennzeichnet, dass** während der Freilaufphase der den Freilaufstrom führende Schalter (TR1 - TR6) derart invers betrieben wird, dass er zunächst eingeschaltet ist, wobei der Komparator (15) beim Unterschreiten des Schwellenwertes ein Schaltsignal (S3A) bereitstellt zum Abschalten des Schalters (TR1 - TR6) im Freilaufkreis.

2. Schaltungsanordnung nach Anspruch 1, bei der die vorgegebene Schwelle auf den Wert Null festgelegt ist zum Detektieren des Nulldurchganges des Freilaufstromes.

3. Schaltungsanordnung nach einem der vorhergehenden Ansprüche, bei der der Freilaufstrom indirekt über den Spannungsabfall UDS am Schalter (TR1-TR6) erfasst wird.

4. Schaltungsordnung nach einem der vorhergehenden Ansprüche, bei der die elektrische Maschine in der Diagonale einer H-Brücke (11) angeordnet ist, die zwei Highside-Schalter TR1, TR3 und zwei Lowside-Schalter TR2, TR4 aufweist.

5. Schaltungsanordnung nach Anspruch 4, bei der ein Highside-Schalter TR1, TR3 ständig eingeschaltet ist und bei der einem Lowside-Schalter TR4, TR2 das impulsförmige Signal S2, S4 zugeführt erhält und bei der dem anderen Highside-Schalter TR3, TR1 die Freilauffunktion zugewiesen ist.

6. Schaltungsanordnung nach Anspruch 4, bei der ein Lowside-Schalter TR2, TR4 ständig eingeschaltet ist, bei der ein Highside-Schalter TR3, TR1 das impulsförmige Signal S1, S3 zugeführt erhält und bei der dem anderen Lowside-Schalter TR4, TR2 die Freilauffunktion zugewiesen ist.

7. Schaltungsanordnung nach einem der vorhergehenden Ansprüche, bei der das impulsförmige Signal (S1-S4) zum Einstellen einer mittleren Betriebsspannung der elektrischen Maschine pulsbreitenmoduliert ist.

8. Schaltungsanordnung nach einem der vorhergehenden Ansprüche, bei der die Schalter TR1-TR6 als MOS-Feldeffekttransistoren realisiert sind.

9. Schaltungansordnung nach einem der vorhergehenden Ansprüche, bei der als elektrische Maschine eine mehrphasige Maschine vorgesehen ist.

10. Schaltungsanordnung nach Anspruch 9, **dadurch gekennzeichnet, dass** ein elektronisch kommutierter Gleichstrommotor (BLDC) vorgesehen ist.

11. Schaltungsanordnung nach einem der Ansprüche 1 bis 9, bei der als elektrische Maschine ein Asynchronmotor vorgesehen ist.

## Claims

1. Circuit arrangement for operation of electrical machines which contain an inductive component (W1, W2, W3), having a switch (TR1 - TR6) which switches the electrical machine with a pulsed signal (S1 - S4), having a freewheeling circuit which contains a switch (TR1 - TR6), having a comparator (15) which compares the freewheeling current that flows in the freewheeling circuit during a freewheeling phase with a predetermined threshold value, **characterized in that,** during the freewheeling phase, the switch (TR1 - TR6) which carries the freewheeling current is operating in an inverse manner such that it is first of all switched on, with the comparator (15) producing a switching signal (S3A) when the threshold value is undershot, in order to switch off the switch (TR1 - TR6) in the freewheeling circuit.

2. Circuit arrangement according to Claim 1, in which the predetermined threshold is fixed at the value zero in order to detect the zero crossing of the freewheeling current.

3. Circuit arrangement according to one of the preceding claims, in which the freewheeling current is detected indirectly via the voltage drop UDS across the switch (TR1 - TR6).

4. Circuit arrangement according to one of the preceding claims, in which the electrical machine is arranged in the diagonal of an H-bridge (11) which has two high-side switches TR1, TR3 and two low-side switches TR2, TR4.

5. Circuit arrangement according to Claim 4, in which a high-side switch TR1, TR3 is switched on all the time and in which one low-side switch TR4, TR2 is supplied with the pulsed signal S2, S4, and in which the other high-side switch TR3, TR1 is assigned the freewheeling function.

6. Circuit arrangement according to Claim 4, in which one low-side switch TR2, TR4 is switched on all the time, in which one high-side switch TR3, TR1 is supplied with the pulsed signal S1, S3, and in which the other low-side switch TR4, TR2 is assigned the freewheeling function.

7. Circuit arrangement according to one of the preceding claims, in which the pulsed signal (S1 - S4) is pulse-width modulated in order to set a medium operating voltage of the electrical machine.

8. Circuit arrangement according to one of the preceding claims, in which the switches TR1 - TR6 are in the form of MOS field-effect transistors.

9. Circuit arrangement according to one of the preceding claims, in which a polyphase machine is provided as the electrical machine.

10. Circuit arrangement according to Claim 9, **characterized in that** an electronically commutated DC motor (BLDC) is provided.

11. Circuit arrangement according to one of Claims 1 to 9, in which an asynchronous motor is provided as the electrical machine.

## Revendications

1. Circuit pilote pour machines électriques qui contiennent un composant inductif (W1, W2, W3), et qui présente
un commutateur (TR1, TR6) qui applique un signal (S1, S4) en forme d'impulsions sur la machine électrique,
un circuit de rotation à vide qui contient un commutateur (TR1, TR6),
un comparateur (15) qui compare à une valeur de seuil prédéterminée le courant de rotation à vide qui s'écoule dans le circuit de rotation à vide pendant une phase de rotation à vide,
**caractérisé en ce que**
pendant la phase de rotation à vide, le commutateur (TR1, TR6) qui laisse passer le courant de rotation à vide est inversé de manière à être d'abord branché, le comparateur (15) appliquant un signal de commutation (S3A) de débranchement du commutateur (TR1-TR6) du circuit de rotation à vide lorsque la valeur de seuil n'est pas atteinte.

2. Circuit selon la revendication 1, dans lequel le seuil prédéterminé est fixé à la valeur zéro pour détecter le passage par zéro du courant de rotation à vide.

3. Circuit selon l'une des revendications précédentes, dans lequel le courant de rotation à vide est détecté indirectement par la chute de tension UDS aux bornes du commutateur (TR1-TR6).

4. Circuit selon l'une des revendications précédentes, dans lequel la machine électrique est disposée dans les diagonales d'un pont en H (11) qui présente deux commutateurs TR1, TR3 du côté supérieur et deux commutateurs TR2, TR4 du côté inférieur.

5. Circuit selon la revendication 4, dans lequel un commutateur TR1, TR3 du côté supérieur est branché en permanence, dans lequel un commutateur TR4, TR2 du côté inférieur reçoit le signal S2, S4 en forme d'impulsions qui lui est apporté et dans lequel l'autre commutateur TR3, TR1 du côté supérieur est attribué au fonctionnement à vide.

6. Circuit selon la revendication 4, dans lequel un commutateur TR2, TR4 du côté inférieur est branché en permanence, un commutateur TR3, TR1 du côté supérieur recevant le signal S1, S3 en forme d'impulsions qui lui est apporté, l'autre commutateur TR4, TR2 du côté inférieur étant attribué au fonctionnement à vide.

7. Circuit selon l'une des revendications précédentes, dans lequel le signal (S1, S4) en forme d'impulsions a ses impulsions modulées en largeur pour fixer une tension moyenne de fonctionnement de la machine électrique.

8. Circuit selon l'une des revendications précédentes, dans lequel les commutateurs TR1-TR6 sont réalisés sous la forme de transistors MOS à effet de champ.

9. Circuit selon l'une des revendications précédentes, dans lequel la machine électrique prévue est une machine polyphasée.

10. Circuit selon la revendication 9, **caractérisé en ce qu'**il présente un moteur à courant continu commuté électroniquement (BLDC).

11. Circuit selon l'une des revendications 1 à 9, dans lequel la machine électrique prévue est un moteur asynchrone.
